## Europäisches Patentamt
## European Patent Office
## Office européen des brevets

(19)

(11) Numéro de publication: **0 148 683**
**B1**

(12) **FASCICULE DE BREVET EUROPÉEN**

(45) Date de publication du fascicule du brevet:
22.07.87

(51) Int. Cl.⁴: **B 64 D 7/00,** F 41 F 5/02

(21) Numéro de dépôt: **84402612.0**

(22) Date de dépôt: **17.12.84**

(54) **Dispositif de mise à poste et de dépose rapides d'un chargeur dans un dispositif d'emport sur avion.**

(30) Priorité: **10.01.84 FR 8400267**

(43) Date de publication de la demande:
**17.07.85 Bulletin 85/29**

(45) Mention de la délivrance du brevet:
**22.07.87 Bulletin 87/30**

(84) Etats contractants désignés:
**DE GB IT**

(56) Documents cité:
**EP-A-0 067 731**

(73) Titulaire: **R. ALKAN & Cie., Rue du 8 mai 1945,
F-94460 Valenton (FR)**

(72) Inventeur: **Duclos, Didier, 80, rue Victor Hugo,
F-94700 Maisons- Alfort (FR)**
Inventeur: **Coutin, Pierre, 117, avenue du Général
Michel Bizot, F-75012 Paris (FR)**

(74) Mandataire: **Hud, Robert, Cabinet COLLIGNON 6,
rue de Madrid, F-75008 Paris (FR)**

EP 0 148 683 B1

## Description

On a prévu, sur le dispositif modulaire pour le chargement de cartouches faisant l'objet de la demande de brevet français de la même société n° 83.19579 du 7 décembre 1983, des éléments de fixation 17 dénommés baïonnettes et schématisés sur la figure 5 de cette demande.

La présente invention concerne un dispositif de mise à poste et de dépose rapides d'un chargeur dans un dispositif d'emport sur avion applicable notamment au module de chargement de cartouches utilisant les baïonnettes ci-dessus. Ce dispositif agit par l'intermédiaire d'un levier approprié en fer à cheval ou en étrier, utilisé conjointement avec un dispositif d'accrochage automatique préalable du module destiné à faciliter la manoeuvre.

L'utilisation du levier assure, à l'aide d'une vis unique, le contact franc sous une pression déterminée du module avec le dispositif d'emport, ainsi qu'une répartition uniforme des efforts.

Par sécurité, un arrêt positif de l'unique vis a été prévu. Cet arrêt positif est effacé, pour permettre la manoeuvre de la vis, à l'aide d'une broche (préférablement de type à billes effaçables) munie d'une flamme indiquant sa présence. Lors de la dépose, la même broche peut être utilisée pour supprimer l'accrochage automatique préalable qui a été effectué à la mise à poste.

On précisera ci-après une forme d'exécution du dispositif proposé, en référence au dessin schématique annexé, dans lequel:

la figure 1 représente un module à poste et un module en cours de mise à poste dans un même dispositif d'emport;

la figure 2 montre le détail de l'accrochage du levier dans une des baïonnettes du module;

la figure 3 est une coupe transversale montrant le levier amené en position haute à l'aide de la vis de fixation;

la figure 4 est une vue partielle montrant le système d'arrêt de la vis de fixation et la broche d'effacement de cet arrêt;

la figure 5 montre le système d'accrochage automatique et le module en approche;

la figure 6 montre le module en position d'accrochage préalable;

la figure 7, analogue à la figure 6, montre le module complètement à poste; et

la figure 8 montre la position des pièces d'accrochage après l'introduction de la broche qui permet la dépose.

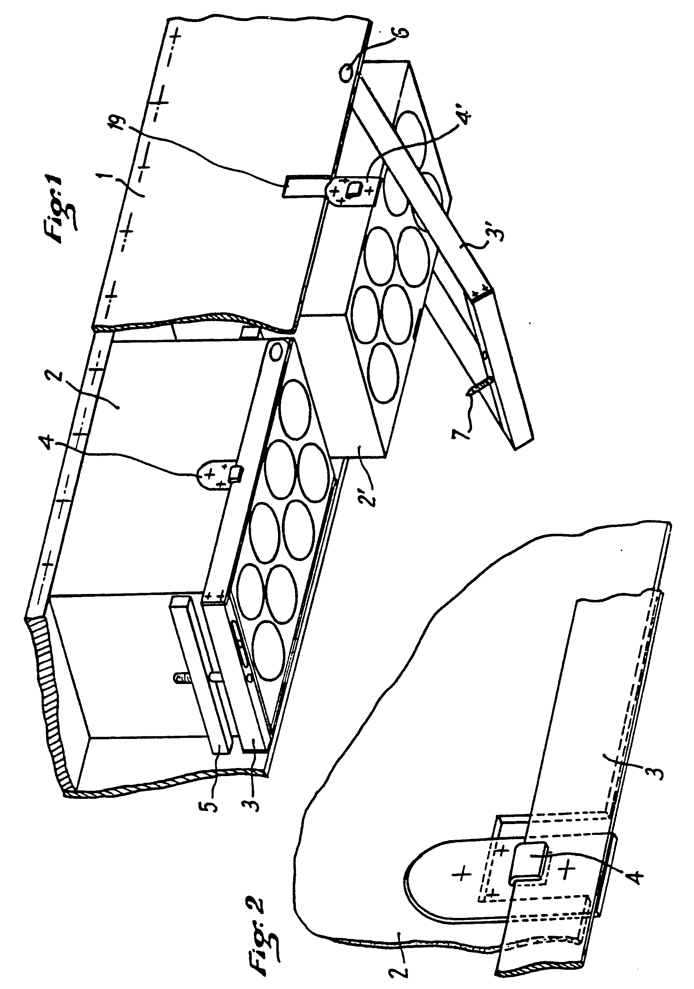

Sur la vue schématique de la figure 1, le dispositif d'emport 1 solidaire de l'avion est partiellement coupé pour mieux montrer le module 2 complètement à poste tandis qu'on a indiqué en 2' un module incomplètement introduit dans le dispositif d'emport mais déjà accroché automatiquement comme on l'expliquera plus loin. Pour mieux faire comprendre le rôle du levier en fer à cheval ou en étrier 3-3', on a volontairement exagéré le dépassement du module 2' par rapport au dispositif d'emport 1 après l'accrochage préalable.

On comprendra qu'un dispositif d'emport tel que 1 peut comporter un ou plusieurs emplacements de module selon les programmes d'emploi, chaque emplacement étant équipé du dispositif qui fait l'objet de la présente invention. Chaque levier en fer à cheval 3-3' comprend un élément transversal entre deux éléments latéraux pouvant s'engager dans des pièces 4-4' dénommées baïonnettes qui se présentent sous la forme de crochets en saillie sur les flancs du module correspondant. Des encoches 19, ménagées dans les parois du dispositif d'emport, permettent le passage de ces pièces en saillie et l'introduction complète des modules dans le dispositif d'emport.

Les leviers 3-3' s'articulent en 6 sur le dispositif d'emport et leur élément transversal réunissant les deux éléments latéraux à l'opposé des articulations 6 comporte une vis centrale 7 destinée à leur fixation sur une traverse 5 solidaire du dispositif d'emport 1.

La figure 2 est une vue agrandie montrant l'engagement d'un des éléments latéraux du levier 3 dans la baïonnette 4 fixée sur le module 2.

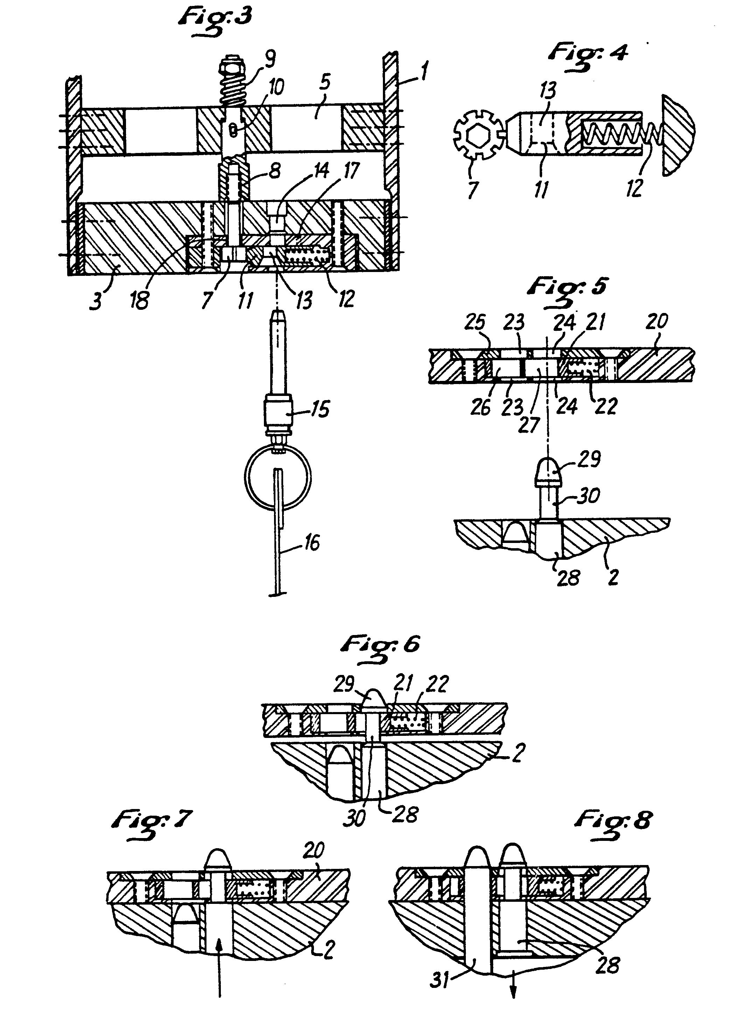

La figure 3 est une vue transversale du dispositif où l'on retrouve l'élément transversal du levier 3 en forme de fer à cheval et la traverse 5 solidaire du dispositif d'emport 1. Dans cette traverse 5 coulisse une pièce taraudée 8 rappelée vers le haut par un ressort taré 9. Pour des facilités d'exécution, cette pièce 8 est préférablement cylindrique et sa rotation est empêchée par un système connu, par exemple à l'aide d'une goupille fixe 10 et d'une fente oblongue verticale correspondante ménagée dans la pièce coulissante pour recevoir la goupille fixe. La vis 7, préférablement à six pans creux pour permettre un crénelage extérieur de sa tête comme le montre la figure 4, se visse dans la pièce taraudée 8 jusqu'au contact de la base de cette pièce 8 sur l'élément transversal du levier 3 comme on l'a représenté sur la figure 3.

La précontrainte entre le module 2 et le dispositif d'emport 1 est alors uniquement définie par la tension du ressort taré 9. On comprendra que cette précontrainte s'exerce par l'intermédiaire du levier 3 sur les baïonnettes latérales 4 situées au milieu de la longueur du module et qu'ainsi les efforts sur le fond du dispositif d'emport, limités par le ressort 9, sont de plus uniformément répartis.

Comme il a été dit, on a prévu, par mesure de sécurité, de freiner positivement l'unique vis de fixation 7. Ce freinage (figure 4) est réalisé à l'aide d'un doigt coulissant 11 qui est poussé par un ressort 12 et dont l'extrémité s'engage dans un des créneaux prévus à l'extérieur de la tête de la vis 7. Afin de pouvoir utiliser la vis 7 lors du serrage ou de la dépose, on a prévu une position rétractée du doigt coulissant 11 qu'on obtient en amenant en coïncidence le trou cylindrique 13, ménagé dans le doigt 11 et le trou cylindrique 14 (figure 3) ménagé dans l'élément transversal de l'étrier 3. A cet effet, on utilise une broche 15 à billes effaçables d'un modèle connu qui, après son introduction dans le trou 13 puis dans le trou 14, reste en place. La présence de cette broche 15 est signalée par une flamme 16. Pour des facilités d'exécution, le doigt 11 est préférablement cylindrique et, pour empêcher sa rotation, un ergot fixe 17 pénètre dans une fente oblongue correspondante ménagée longitudinalement dans le doigt coulissant 11. La vis 7 est rendue imperdable par un procédé connu qui consiste à tarauder la partie 18 de l'étrier 3.

Sur la figure 5, on a indiqué en 20 le fond du dispositif d'emport 1 dans lequel on a prévu une targette 21 poussée vers la gauche de la figure par un ressort 22. Des trous cylindriques d'égal diamètre 23 et 24 sont prévus dans le fond 20 et dans la plaquette 25 maintenant la targette 21 tandis que des trous équivalents 26 et 27 sont prévus dans la targette 21.

Le module 2 comporte un axe cylindrique 28 à tête ogivale 29 sous laquelle on a prévu une partie cylindrique réduite 30.

La figure 6 montre le module 2 en position d'accrochage préalable. La tête ogivale 29 de l'axe 28, après avoir repoussé la targette 21 contre le ressort 22, prend appui sur cette targette 21 qui coulisse vers la gauche de la figure dès que la partie réduite de l'axe 28 le permet. On remarquera que les éléments de cet accrochage préalable sont conçus pour s'accomoder d'un fond 20 de faible épaisseur.

La figure 7 ne se différencie de la figure 6 que par l'introduction complète du module 2 amené au contact du fond 20 du dispositif d'emport 1 par le serrage de la vis 7.

La figure 8 montre le déverrouillage de l'axe 28 obtenu par l'introduction d'une broche 31 dans les trous 23 du fond 20 et 26 de la targette 21, ce qui assure la coïncidence des axes et en particulier l'alignement des trous 24 du fond et 27 de la targette en permettant le retrait de l'axe 28.

L'utilisation du dispositif découle de la description qui précède. Pour la pose d'un chargeur 2, on l'introduit dans le dispositif d'emport 1 jusqu'à l'encliquetage de l'axe 28 qui se fait automatiquement comme on l'a indiqué. Cet encliquetage préalable permet de relever sans difficulté le levier 3 en le faisant pivoter sur les articulations 6. Les deux branches latérales de ce levier s'engagent dans les pièces d'accrochage latérales 4 dites baïonnettes, fixées de part et d'autre du centre de gravité du chargeur 2, et la vis unique 7 vient à l'aplomb de la pièce taraudée 8 solidaire de la traverse 5 du dispositif d'emport 1.

Le vissage de la vis 7 est effectué après effacement du doigt coulissant 11 obtenu par l'engagement de la broche à billes 15 dans le trou 13 du doigt 11 et le trou 14 de la branche transversale du levier 3. Ce vissage qui a pour effet de parfaire l'introduction du chargeur 2 dans le dispositif d'emport 1 amène la pièce 8 au contact de la branche transversale du levier 3. On retire alors la broche à billes 15 pour libérer le doigt 11 dont l'extrémité peut s'introduire dans un des créneaux ménagés sur l'extérieur de la tête de la vis 7 en interdisant ainsi le desserrage accidentel de cette vis.

Le ressort 9, taré initialement, limite à la valeur convenable l'effort de maintien du chargeur 2 dans le dispositif d'emport 1. Cet effort est transmis au chargeur 2 au niveau des pièces d'accrochage 4 par l'intermédiaire des branches latérales du levier 3 qui y sont engagées comme déjà indiqué.

La dépose se fait également en deux temps et dans l'ordre inverse en remettant en place la broche à billes 15. Le levier 3 étant amené en position de dégagement complet, le chargeur 2 reste suspendu par l'accrochage automatique. L'utilisation de la broche 31 amène les pièces d'accrochage dans la position de la figure 8, ce qui permet la dépose complète du chargeur 2.

Le dispositif de mise à poste et de dépose rapides ainsi décrit peut s'appliquer non seulement à la mise à poste d'un chargeur dans un lance-cartouches, emploi qui a été donné à titre d'exemple, mais également à tous les cas analogues sans rapport avec l'emport des cartouches.

**Revendications**

1. Dispositif de mise à poste et de dépose rapides d'un chargeur dans un dispositif d'emport sur avion caractérisé par un levier (3) en forme de fer à cheval ou d'étrier comprenant une branche transversale entre deux branches latérales qui supportent le chargeur (2) et qui sont articulées sur le dispositif d'emport (1) à leurs extrémités (6) opposées à la branche transversale tandis que celle-ci porte une vis unique (7) de fixation sur le dispositif d'emport, la manoeuvre de ce levier étant facilitée par l'accrochage préalable automatique du chargeur (2) sur une targette plate particulière (21) logée dans l'épaisseur du fond (20) du dispositif d'emport.

2. Dispositif selon la revendication 1, dans lequel la targette plate d'encombrement réduit comporte deux trous (26-27) et coulisse dans l'épaisseur du fond (20) du dispositif d'emport (1) entre deux positions extrèmes, l'une vers laquelle elle est sollicitée par un ressort (22) et dans laquelle les trous (26-27) ne sont pas en regard de trous correspondants (23-24) ménagés dans le fond (20) du dispositif d'emport, l'autre au contraire où la coïncidence des trous de targette (26-27) et des trous du fond (23-24) est obtenue soit, pour l'accrochage automatique du chargeur, par l'introduction d'un axe d'accrochage (28) solidaire du chargeur dans un trou (27) de la targette et un trou (24) du fond soit, pour la dépose, par l'introduction d'une broche auxiliaire (31) dans un autre trou (26) de la targette et un autre trou (23) du fond (20).

3. Dispositif selon la revendication 1, dans lequel une butée limite la course de la vis de fixation (7) de sorte que seul un ressort taré (9) assure une précontrainte limitée entre le chargeur (2) et le dispositif d'emport (1).

4. Dispositif selon la revendication 1, dans lequel le levier en fer à cheval (3) agit par ses branches latérales sur le chargeur (2) de part et d'autre du centre de gravité du chargeur en répartissant ainsi uniformément entre le chargeur et le fond du dispositif d'emport la contrainte définie par le ressort taré (9).

5. Dispositif selon la revendication 1, dans lequel la vis unique de fixation (7) est freinée positivement par un doigt à ressort (11) qui s'engage dans un crénelage de la tête de la vis et dont la position rétractée, permettant la manoeuvre de la vis, est obtenue par l'introduction, dans un trou (13) du doigt (11), d'une broche (15) visualisée par une flamme (16).

**Patentansprüche**

1. Schnell-Aufnahme- und - Abgabevorrichtung für einen Transportbehälter (2) bei einem Tragsystem (1) eines Flugzeugs, dadurch gekennzeichnet, daß ein hufeisen- oder bügelförmiger Hebel (3) einen Quersteg zwischen zwei seitlichen Schenkeln aufweist, welche den Transportbehälter (2) stützen und an ihren dem Quersteg gegenüberliegenden Enden (6) am Tragsystem (1) angelenkt sind, während der Quersteg eine einzige Schraube (7) zur Befestigung am Tragsystem aufweist, wobei die Betätigung des Hebels (3) durch vorheriges automatisches Festhaken des Transportbehälters (2) auf einem speziellen flachen Riegel (21) vereinfachbar ist, welcher sich im Bereich der Dicke des Bodens (20) des Tragsystems (1) befindet.

2. Vorrichtung nach Anspruch 1, dadurch gekennzeichnet, daß der flache platzsparende Riegel (21) zwei Öffnungen (26, 27) aufweist und im Bereich der Dicke des Bodens (20) des Tragsystems (1) zwischen zwei Endstellungen gleitet, nämlich einer Stellung, in welche er durch eine Feder (22) gespannt ist und in welcher die Öffnungen (26, 27) nicht mit entsprechenden Öffnungen (23, 24) im Boden (20) des Tragsystems (1) überlappen bzw. übereinstimmen und einer zweiten entgegengesetzten Stellung, in welcher sich die Öffnungen (26, 27) im Riegel (21) mit den Öffnungen (23, 24) im Boden (20) dadurch decken, daß der Transportbehälter (2) automatisch durch Einsetzen einer fest mit diesem verbundenen Halteachse (28), in die eine Öffnung (27) im Riegel (21) und die eine Öffnung (24) im Boden (20) festhakbar ist, bzw. daß zur Lagerung eine Zusatzspindel (31) in die andere Öffnung (26) des Riegels (21) und die andere Öffnung (23) im Boden (20) einsetzbar ist.

3. Vorrichtung nach Anspruch 1, dadurch gekennzeichnet, daß zur Begrenzung des Weges der Befestigungsschraube (7) ein Anschlag in der Weise vorgesehen ist, daß allein eine geeichte Feder (9) eine begrenzte mechanische Vorspannung zwischen dem Transportbehälter (2) und dem Tragsystem (1) sicherstellt.

4. Vorrichtung nach Anspruch 1, dadurch gekennzeichnet, daß der hufeisenförmige Hebel (3) über seine seitlichen Schenkel auf den Transportbehälter (2) beiderseits des Schwerpunktes desselben so einwirkt, dan die durch die geeichte Feder (9) vorgegebene Vorspannung gleichmäßig zwischen dem Transportbehälter (2) und dem Boden (20) des Tragsystems (1) verteilbar ist.

5. Vorrichtung nach Anspruch 1, dadurch gekennzeichnet, daß die einzige Befestigungsschraube (7) positiv mittels eines Federzapfens (11) abbremsbar ist, welcher mit einer Rändelung auf dem Schraubenkopf in Eingriff steht und dessen zurückgezogene Stellung, in welcher eine Betätigung der Schraube (7) möglich ist, durch Einführen einer Spindel (15) unter optischer Anzeige bzw. Sichtbarmachung mittels eines Signals bzw. einer Flamme (16) in eine Öffnung (13) des Federzapfens (11) erzielbar ist.

**Claims**

1. A rapid mounting and dismounting device for a loader in a suspension device carried on an aircraft, characterized by a lever (3) in the form of a horseshoe or stirrup having a transverse leg between two lateral legs which support the loader (2) and which are articulated to the suspension device (1) at their ends (6) opposite the transverse leg whereas this latter has a single screw (7) for fixing to the suspension device, operation of this lever being facilitated by the prior automatic coupling of the loader (2) to a special flat bolt (21) housed in the thickness of the bottom (20) of the suspension device.

2. Device according to claim 1, in which the flat bolt of reduced size includes two holes (26-27) and slides in the thickness of the bottom (20) of the suspension device (1) between two end positions, towards one of which it is urged by a spring (22) and in which the holes (26-27) are not opposite corresponding holes (23-24) formed in the bottom (20) of the suspension device, the other in which, on the contrary, the coincidence of the bolt holes (26-27) and of the holes in the bottom (23-24) is obtained either, for automatic coupling of the loader, by introducing a coupling pin (28) integral with the loader in a hole (27) of the bolt and a hole (24) in the bottom or, for dismounting, by introducing an auxiliary pin (31) in another hole (26) of the bolt and another hole (23) of the bottom (20).

3. Device according to claim 1, in which a stop limits the travel of the fixing screw (7) so that a single calibrated spring (9) provides a limited prestress between the loader (20) and the suspension device (1).

4. Device according to claim 1, in which the horseshoe lever (3) acts by its side legs on the loader (2) on each side of the center of gravity of the loader while thus uniformly distributing the stress defined by the calibrated spring (9) between the loader and the bottom of the suspension device.

5. Device according to claim 1, in which the single fixing screw (7) is positively checked by a spring finger (11) which engages in a notch of the head of the screw and whose retracted position, allowing actuation of the screw, is obtained by introducing, into a hole (13) of the finger (11), a pin (15) made visible by a streamer (16).

Fig. 1

Fig. 2

0 148 683

**Fig. 3**

**Fig. 4**

**Fig. 5**

**Fig. 6**

**Fig. 7**

**Fig. 8**